# EUROPEAN PATENT SPECIFICATION

(11) **EP 4 166 885 B1**
(45) Date of publication and mention of the grant of the patent: **03.09.2025**
(21) Application number: 21202177.8
(22) Date of filing: 12.10.2021
(51) Int. Cl.: F28D 1/053, F28F 9/00, B60H 1/00, B60K 11/04, F01P 3/18

(54) **A MODULE FOR A MOTOR VEHICLE**
MODUL FÜR EIN KRAFTFAHRZEUG
MODULE POUR VÉHICULE À MOTEUR

(43) Date of publication of application: 19.04.2023
(73) Proprietor: Valeo Autosystemy SP. Z.O.O., 32-050 Skawina (PL)
(72) Inventor: FICEK, Natalia Sabina, 32 050 Skawina (PL); WOZEK, Mateusz, 32 050 Skawina (PL); GRZESZCZAK, Bartlomiej, 32 050 Skawina (PL)
(74) Representative: Valeo Powertrain Systems

(56) References cited:
- EP-A1- 3 025 883
- EP-A1- 3 093 172
- DE-A1- 102014 207 487
- DE-U1- 29 911 505
- US-A1- 2015 144 757

## Description

The present invention generally relates to a heat exchanger module for a vehicle. In particular, the invention relates to a sealing between a heat exchanger and other sub-components of the motor vehicle. A heat exchanger module having the features of the preamble of claim 1 is known from EP 3 093 172.

Generally, the heat exchangers are provided in a vehicle to change temperature of the fluid flowing there through. The heat exchangers can be evaporators, radiators and condensers. To mount the heat exchangers in the vehicle, a module provided with a frame is connected to the heat exchangers. The module is commonly known as a heat exchanger module. The heat exchanger module may include one or more heat exchangers coupled to the frame of the module. The frame is to provide support to the heat exchangers and may provide a mounting means for mounting the heat exchangers in the vehicle. The frame may include a receiving means for receiving the heat exchangers. Further, the frame made of four parts adapted to be connected each other upon receiving the heat exchanger. Further, a gap may inadvertently formed between the frame and a manifold of the heat exchanger. Such gap may enable flow of ambient air through the gap without passing through a core of the heat exchanger. Hence, the heat exchange between the fluid flowing in the heat exchanger and the air flowing around the core of the heat exchanger is reduced. As a result, the thermal performance of the heat exchangers is be affected. To avoid such problem, a sealing element such as foam is applied to four sides of the heat exchanger before connecting the heat exchanger with the frame. Generally, the foam is glued to the sides of the heat exchanger. However, such technique has detrimental effect on the environment, due to usage of glue in the module. Further, it causes reliability issues as the foam may dislocate from its position while handling the heat exchanger or while assembling the heat exchanger into the frame. Such technique may require more components to connect to the heat exchanger that inadvertently increases production time and complexity.

Accordingly, there remains a need for a heat exchanger module having a means for blocking airflow between a frame and a manifold of a heat exchanger of the module. Further, there remains another need for a frame adapted to seal a gap between the frame and a heat exchanger so as to redirect air to the heat exchanger. Further, it would be desirable that the sealing means are fixed to the heat exchanger in an effortless manner, so that the time required for sealing the outer surfaces of the heat exchanger is as low as possible.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

In view of the foregoing, an embodiment of the invention herein provides a module for a motor vehicle, particularly, a heat exchanger module for a motor vehicle. The module includes the features of claim 1.

In one embodiment, the first portion is adapted to be fixed to the first and second sides of the manifolds and the third side of the heat exchange elements. Further, the closing portion is adapted to be fixed to the fourth side of the heat exchange elements.

Further, the pair of sliders of the first portion is in contact with the first and second sides of the manifolds and the base part of the first portion is in contact with the third side of the heat exchanger.

In another embodiment, the first portion is adapted to be fixed to the first side of the manifold and third and fourth sides of the heat exchange elements, whereas the closing portion is adapted to be fixed in parallel to the second side of the manifold.

Further, the base part of the first portion is in contact with the first side of the manifold, and the pair of sliders of the first portion is in contact with the third and fourth sides of the heat exchange elements.

In this example, the heat exchanger is configured as an operation of a condenser, the first fluid being air and the second fluid being a liquid refrigerant.

Further, at least one straight rib is aligned between the bottle and the second side of the manifold.

In one example, the sealing frame includes at least one clip formed on at least one of the closing portion and the first portion and the clip is facing the heat exchange elements to abut on at least one heat exchange element.

Further, the closing portion includes at least one coupling part formed at an end of the closing portion and the coupling part is adapted to couple with the first portion.

In one example, the heat exchanger further mounting brackets formed on the terminal plates of the heat exchange elements.

Further, the closing portion includes apertures to allow passing of the mounting brackets there through when the closing portion is coupled to the heat exchanger.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
Fig. 1 illustrates a schematic view of a module for a motor vehicle, in accordance with an embodiment of the present invention;
Fig. 2 illustrates a perspective view of a heat exchanger of the module of Fig. 1 without a sealing frame;
Fig. 3 illustrates a schematic view of a U-shaped first portion of the sealing frame of Fig. 1; and
Fig. 4 illustrates schematic view of the sealing frame of Fig. 1, showing a closing portion with the U-shaped first portion.

It must be noted that the figures disclose the invention in a detailed enough way to be implemented, the figures helping to better define the invention if needs be. The invention should however not be limited to the embodiments disclosed in the description.

The present invention envisages a module for a motor vehicle.. The present invention is directed to address a problem of sealing between a frame and a manifold of a heat exchanger received in the frame. In addition, the conventional frame has multiple components connected together to form the frame, thereby increasing production/assembly time of the frame. Conventionally, the module, also referred to as a heat exchanger module, is provided with the frame to receive the heat exchanger and to mount the heat exchanger in the vehicle. Further, a gap may be inadvertently formed between the frame and the heat exchanger. The gap allows airflow between the frame and the heat exchanger, which results in reduced airflow across the heat exchanger. As a result, the thermal performance of the heat exchanger is reduced. To mitigate the problems, a frame designed so as to be in contact to manifolds of the heat exchanger. Geometry and design of the frame are described with respect to the forthcoming figures.

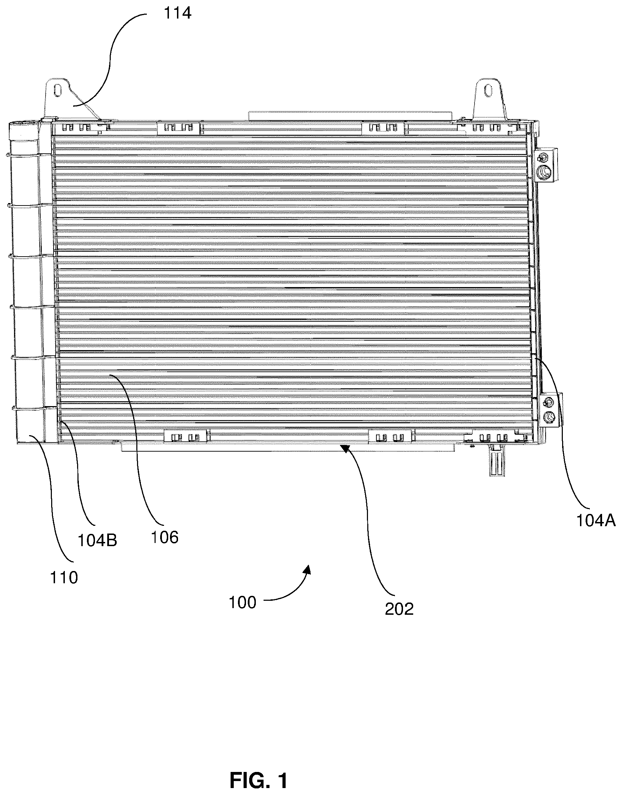

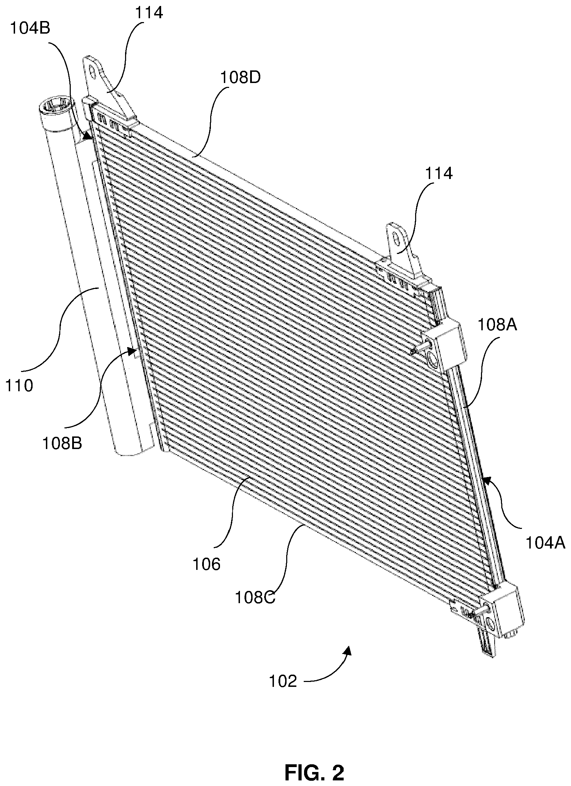

Fig. 1 illustrates a schematic view of a module 100 for a motor vehicle, in accordance with an embodiment of the present invention. The module 100 may also be referred to as a heat exchanger module. The module 100 includes at least one heat exchanger 102 and a sealing frame 202. Fig. 2 illustrates a perspective view of the heat exchanger 102 of Fig. 1 without the sealing frame 202. The heat exchanger 102 is configured for a heat exchange between a first fluid and a second fluid. In one example, the heat exchanger 102 maybe a condenser. In such case, the first fluid is air and the second fluid is a liquid refrigerant.

The heat exchanger 102 includes a pair of manifolds 104A-B forming a first side 108A and a second side108B, and a plurality of heat exchange elements 106. In this example, the heat exchange elements 106 being heat exchange tubes stacked between the manifolds 104A-B to enable the first fluid flow in between the heat exchange elements 106. Here, the first fluid flows in between the heat exchange elements 106 and the second fluid flows through the heat exchange elements 106, thereby enabling the heat exchange between the first fluid and the second fluid. Further, the heat exchange elements 106 form a third side 108C and a fourth side 108D on terminal ends of the stack of heat exchange elements 106.

In case the heat exchanger 102 is a condenser, the heat exchanger 102 may include a bottle 110 fluidically connected to the heat exchange elements 106 to enable the second fluid flow in the bottle 110. Here, the bottle 110 is receiver drier adapted to remove moisture content from the second fluid and act as a reservoir for the second fluid. To provide structural support to the bottle 110, the bottle 110 may attached to the second side 108B of the manifold 104B without disturbing fluidal connection with the heat exchange elements 106. Further, there is a possibility to form a gap between the bottle 110 and respective side 108B of the manifold 104B. Such gap may reduce the first fluid flowing across the heat exchange elements 106, as some portion of the first fluid may flow through the gap and flow in the vicinity of the manifolds 104A-B. Such phenomenon causes detrimental effect on the performance of the heat exchanger 102.

To avoid such problems, the heat exchanger 102 is provided with a sealing frame 202. In this example, the module 100 includes the sealing frame 202 adapted to be fixed all the four sides 108A-D of the heat exchanger 102. The sealing frame 202 is provided with the heat exchanger 102 to isolate the sides 108A-D from the first fluid. In other words, the sealing frame 202 prevents the first fluid from at least in the vicinity of the sides 108A-D of the heat exchanger 102. Here, the sealing frame 202 is adapted to be in contact with all the four sides 108A-D of the heat exchanger 102, thereby avoiding creation of gap between the sides 108A-D of the heat exchanger 102 and the sealing frame 202. Particularly, the sealing frame 202 is in contact with the first and second sides 108AB of the manifolds 104A-B and the third and fourth sides 108C-D formed on the terminal tubes/end plates of the heat exchanger 102.

Further, the heat exchanger includes mounting brackets 114 formed on the terminal tubes of the heat exchanger 102 to mount the module 100 in the vehicle. In another example, the module 100 may include the mounting brackets 114 formed on the sealing frame 202. The mounting brackets 114 may be coupled to the complementary features provided in the vehicle, so that the module 100 can be assembled in the vehicle.

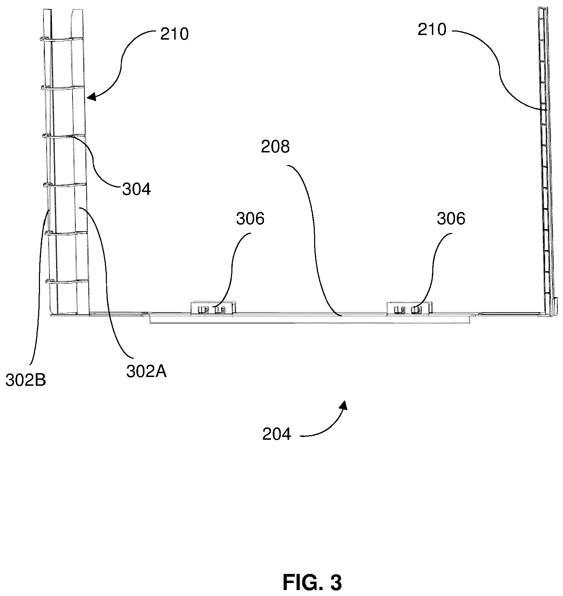

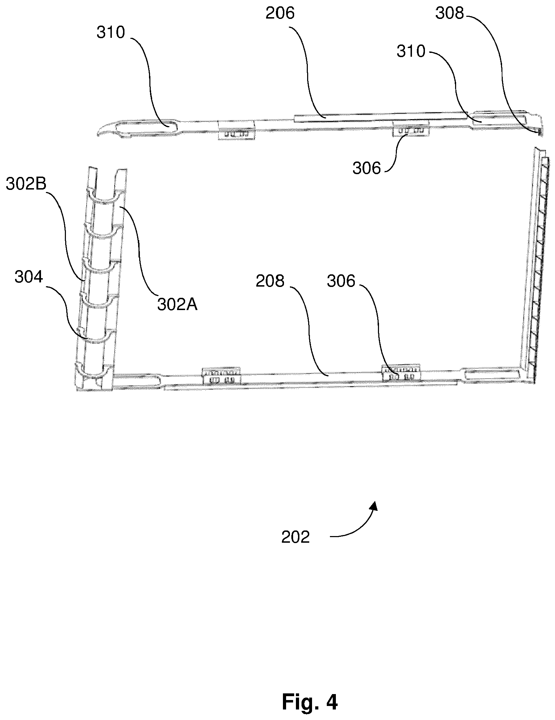

Figs. 3 and 4 illustrate schematic views of the sealing frame 202 of Fig. 1. As explained above, the sealing frame 202 is extending away from the manifolds 104A-B in such a way that the sealing frame 202 may prevent the first fluid flowing around the vicinity of the manifolds 104A-B. Generally, the manifolds 104A-B do not contribute to heat exchange between two fluids, hence it is necessary to restrict the first fluid flowing around the vicinity of the manifolds 104A-B to increase performance of the heat exchanger 102. In one example, the sealing frame 202 can be attached to the first and second sides 108A-B of the manifolds 104A-B and the third and fourth sides 108C-D of the heat exchange elements 106. In another example, the sealing frame 202 may be provided with an open end to receive the heat exchanger 102 and a means to seal the open end of the sealing frame 202. In both examples, the sealing frame 202 is in contact with the four sides 108A-D of the heat exchanger 102.

The sealing frame 202 includes a first portion 204 and a closing portion 206. Here, the first portion is in form of an essentially U-shaped portion 204 adapted to fixed to the heat exchanger 102 and the closing portion 206 adapted to couple to an open end of the U-shaped portion 204. In a preferred example, the first portion 204 is of single piece integrally formed together. Here, the first portion 204 includes a base part 208 and a pair of sliders 210 integrally formed with the base part 208 so as to form the U-shaped first portion 204. Particularly, the base part 208 is formed with the pair of sliders 210 at a first side of the sliders 210 as shown in Fig. 3. As explained above, the base part 208 integrally formed with the sliders 210 is to form the U-shaped first portion 204 with an open end. The closing portion 206 may be coupled to the open end of the U-shaped first portion 204 upon positioning the heat exchanger 102 in the U-shaped first portion 204, thereby forming the sealing frame 202 around the heat exchanger 102.

In first embodiment, the sliders 210 of the first portion 204 may be in contact with the first and second sides 108A-B of the manifolds 104A-B and the base part 208 of the first portion 204 may be in contact with the third side 108C of the heat exchange elements 106, as shown in Fig. 1. In this embodiment, the first portion 204 may be in contact with the first and second sides 108A-B of the manifolds 104A-B and the third side 108C of the heat exchanger 102, wherein the heat exchanger 102 is received in the first portion 204 of the sealing frame 202. Thereafter, the closing portion 206 may be coupled to the open end of the U-shaped first portion 204 in such a way that the closing portion 206 is in contact with fourth side 108D of the heat exchange elements 106.

In second embodiment, the first portion 204 is adapted to be fixed to the third and fourth sides 108C-D of the heat exchanger 102 and the first side 108A of the manifold 104A. Further, the closing portion 206 is adapted to be fixed in parallel manner to the second side of the manifold 104B after receiving the heat exchanger 102 in the first portion 204. Particularly, the sliders 210 of the first portion 204 is adapted to be in contact with the third and fourth sides 108C-D of the heat exchange elements 106, and base part 208 is in contact with the first side 108A of the manifold 104A. This embodiment is not shown in Figures.

According to the invention, the sealing frame 202 further includes ribs to accommodate the bottle 110 of the heat exchanger 102. Particularly, any one of the slider amongst the pair of sliders 210 includes at least two straight ribs 302A-B and a plurality connecting ribs 304. The straight ribs 302A-B are extending along the stacking direction of the heat exchange elements 106 and are in contact with the second side 108B of the manifold 104B. In other words, the straight ribs 302A-B are parallely extending with respect to the manifolds 104A-B of the heat exchanger 102. Further, the connecting ribs 304 are connected between the two ribs 302A-B to accommodate the bottle 110 of the heat exchanger 102. Here, the connecting ribs 304 are curved ribs complementary to the outer circumference of the bottle 110 so that the connecting ribs 304 can be in contact with the outer surface of the bottle 110. Further, at least one straight rib 302A is aligned between the bottle 110 and the second side 108B of the manifold 104B.

As explained above, a gap may be inadvertently formed between the bottle 110 and the manifold 104B, when the bottle 110 is installed in the heat exchanger 102. As the straight rib 302A is positioned in between the bottle 110 and the manifold 104B, the straight rib 302A may close the gap between the bottle 110 and the manifold 104B, thereby redirecting the first fluid flow to the heat exchange elements 106 and avoiding the first fluid flow around the manifolds 104A-B of the heat exchanger 102.

The sealing frame 202 further includes at least one clip 306 formed on any of the closing portion 206 and the first portion 204. In another example, the sealing frame 202 may include multiple clips 306. In such case, the clips 306 can be formed on both the first portion 204 and the closing portion 206. The clips 306 formed on the first portion 204 and the closing portion 206 are facing towards the heat exchange elements 106 received in the sealing frame 202. The clips 306 are adapted to abut at least one heat exchange element 106 amongst the stack of heat exchange elements 106 to arrest the movements of the heat exchange elements 106. In another example, the clips 306 may receive the terminal tube when the heat exchanger 102 is received in the sealing frame 202.

Referring to Fig. 4, the closing portion 206 is provided with at least one coupling part 308 formed at an end of the closing portion 206. The coupling 308 is adapted to be coupled to the sliders 210 of the first portion 204 at a second side, when the closing portion 206 is coupled to the open end of the first portion 204, thereby enabling connection between the first portion 204 and the closing portion 206. The closing portion 206 further includes apertures 310 to allow passing of the mounting brackets 114 there-through when the closing portion 206 is coupled to the heat exchanger 102.

Here, the sealing frame 202 is collectively made of two parts, one being the U-shaped first portion 204 and another being the closing portion 206. As the first portion 204 made of single element/piece, it enables ease assembly of the heat exchanger 102 in the sealing frame 202, thereby reducing production time and cost of the manufacturing of the module 100. Meantime, the straight ribs 302A-B of the sealing frame 202 reduces the first fluid flow in the vicinity of the manifolds 104A-B, thereby increasing the first fluid flow across the heat exchange elements 106. As a result, thermal performance of the heat exchanger 102 can be increased.

All the above-described embodiments are just to explain the present invention while more embodiments and combinations thereof might exist. Hence, the present invention which is defined in the appended claims should not be limited to the above-described embodiments alone.

## Claims

1. A module (100) for a motor vehicle comprising:
at least one heat exchanger (102) for a heat exchange between the first fluid and a second fluid, comprising a pair of manifolds (104A-B) forming a first side (108A) and a second side (104B), and a plurality of heat exchange elements (106) stacked between the manifolds (104A-B) to enable first fluid flow in-between the heat exchange elements (106), wherein the heat exchange elements (106) form a third side (108C) and a fourth side (108D) on the terminal ends of the stack of heat exchange elements (106),
wherein the module (100) comprises:
a sealing frame (202) configured to isolate the sides (108A-108D) from the first fluid, wherein the sealing frame (202) further comprises:
a first portion (204) adapted to be fixed to any of three sides of the heat exchanger (102) and
a closing portion (206) adapted to be fixed to the side of the heat exchanger (102) unoccupied by the first portion (204), wherein the first portion (204) being a U-shaped portion comprises a base part (208) and a pair of sliders (210), wherein the base part (208) is formed at a first side of the pair of sliders (210), **characterized in that** at least one slider amongst the pair of sliders (210) comprises at least two straight ribs (302A-B) extending along the stacking direction of the heat exchange elements (106) and a plurality of connecting ribs (304) connected between the two straight ribs (302A-B) to accommodate a bottle (110) of the heat exchanger (102).

2. The module (100) according to claim 1, wherein the first portion (204) is adapted to be fixed to the first and second sides (108A-B) of the manifolds (104A-B) and the third side (108C) of the heat exchange elements (102), wherein the closing portion (206) is adapted to b fixed to the fourth side (108D) of the heat exchange elements (106).

3. The module (100) according to the claim 2, wherein the pair of sliders (210) of the first portion (204) is in contact with the first and second sides (108A-B) of the manifolds (104A-B) and the base part (208) of the first portion (204) is in contact with the third side (108C) of the heat exchanger (102).

4. The module (100) according to claim 1, wherein the first portion (204) is adapted to be fixed to the first side (108A) of the manifold (104A) and the third and fourth sides (108C-D) of the heat exchange elements (106), whereas the closing portion (206) is adapted to be fixed in parallel to the second side (108B) of the manifold (104B).

5. The module (100) according to claim 4, wherein the base part (208) of the first portion (204) is in contact with the first side (108A) of the manifold (104A), and the pair of sliders (210) of the first portion (204) is in contact with the third and fourth sides (108C-D) of the heat exchange element (106).

6. The use of the heat exchanger (102) as the condenser in the module (100) according to any of the preceding claims, wherein the first fluid is air and the second fluid being a liquid refrigerant.

7. The module (100) according to any of claims 1 to 5, wherein at least one straight rib (302A) is aligned between the bottle (110) and the second side (108B) of the manifold (104B).

8. The module (100) according to any of claims 1 to 5 and 7, the sealing frame (202) further comprising at least one clip (306) formed on at least one of the closing portion (206) and the first portion (204), wherein the clip (306) is facing the heat exchange elements (106) to abut on at least one heat exchange element (106).

9. The module (100) according to any of the preceding claims, wherein the closing portion (206) further comprises at least one coupling part (308) formed at an end of the closing portion (206), wherein the coupling part (308) is adapted to couple with the first portion (204).

10. The module (100) according to any of claims 1 to 5, 7 or 8, further comprising mounting brackets (114) formed on the terminal plates of the heat exchange elements (106).

11. The module (100) according to the preceding claim, the closing portion (206) further comprising apertures (310) to allow passing of the mounting brackets (114) there-through when the closing portion (206) is coupled to the heat exchanger (102).

## Patentansprüche

1. Ein Modul (100) für ein Kraftfahrzeug, umfassend: mindestens einen Wärmetauscher (102) für einen Wärmeaustausch zwischen einem ersten Fluid und einem zweiten Fluid, umfassend ein Paar von Sammelkästen (104A-B), die eine erste Seite (108A) und eine zweite Seite (104B) bilden, und eine Vielzahl von Wärmetauscherelementen (106), die zwischen den Sammelkästen (104A-B) gestapelt sind, um den Fluss des ersten Fluids zwischen den Wärmetauscherelementen (106) zu ermöglichen, wobei die Wärmetauscherelemente (106) eine dritte Seite (108C) und eine vierte Seite (108D) an den Enden des Stapels der Wärmetauscherelemente (106) bilden, wobei das Modul (100) umfasst: einen Dichtungsrahmen (202), der so konfiguriert ist, dass er die Seiten (108A-108D) vom ersten Fluid isoliert, wobei der Dichtungsrahmen (202) ferner umfasst: einen ersten Abschnitt (204), der dazu angepasst ist, an einer der drei Seiten des Wärmetauschers (102) befestigt zu werden, und einen Verschlussabschnitt (206), der dazu angepasst ist, an der Seite des Wärmetauschers (102) befestigt zu werden, die nicht vom ersten Abschnitt (204) belegt ist, wobei der erste Abschnitt (204) ein U-förmiger Abschnitt ist, der einen Basisteil (208) und ein Paar von Schiebern (210) umfasst, wobei der Basisteil (208) an einer ersten Seite des Paares von Schiebern (210) ausgebildet ist, **dadurch gekennzeichnet, dass** mindestens ein Schieber aus dem Paar von Schiebern (210) mindestens zwei gerade Rippen (302A-B) umfasst, die sich entlang der Stapelrichtung der Wärmetauscherelemente (106) erstrecken, und eine Vielzahl von Verbindungsrippen (304), die zwischen den beiden geraden Rippen (302A-B) verbunden sind, um eine Flasche (110) des Wärmetauschers (102) aufzunehmen.

2. Das Modul (100) nach Anspruch 1, wobei der erste Abschnitt (204) dazu angepasst ist, an den ersten und zweiten Seiten (108A-B) der Sammelkästen (104A-B) und an der dritten Seite (108C) der Wärmetauscherelemente (102) befestigt zu werden, wobei der Verschlussabschnitt (206) dazu angepasst ist, an der vierten Seite (108D) der Wärmetauscherelemente (106) befestigt zu werden.

3. Das Modul (100) nach Anspruch 2, wobei das Paar von Schiebern (210) des ersten Abschnitts (204) in Kontakt mit den ersten und zweiten Seiten (108A-B) der Sammelkästen (104A-B) steht und der Basisteil (208) des ersten Abschnitts (204) in Kontakt mit der dritten Seite (108C) des Wärmetauschers (102) steht.

4. Das Modul (100) nach Anspruch 1, wobei der erste Abschnitt (204) dazu angepasst ist, an der ersten Seite (108A) des Sammelkastens (104A) und an der dritten und vierten Seite (108C-D) der Wärmetauscherelemente (106) befestigt zu werden, während der Verschlussabschnitt (206) dazu angepasst ist, parallel zur zweiten Seite (108B) des Sammelkastens (104B) befestigt zu werden.

5. Das Modul (100) nach Anspruch 4, wobei der Basisteil (208) des ersten Abschnitts (204) in Kontakt mit der ersten Seite (108A) des Sammelkastens (104A) steht und das Paar von Schiebern (210) des ersten Abschnitts (204) in Kontakt mit der dritten und vierten Seite (108C-D) des Wärmetauscherelements (106) steht.

6. Die Verwendung des Wärmetauschers (102) als Kondensator in dem Modul (100) gemäß einem der vorhergehenden Ansprüche, wobei das erste Fluid Luft ist und das zweite Fluid ein flüssiges Kältemittel ist.

7. Das Modul (100) nach einem der Ansprüche 1 bis 5, wobei mindestens eine gerade Rippe (302A) zwischen der Flasche (110) und der zweiten Seite (108B) des Sammelkastens (104B) ausgerichtet ist.

8. Das Modul (100) nach einem der Ansprüche 1 bis 5 und 7, wobei der Dichtungsrahmen (202) ferner mindestens einen Clip (306) umfasst, der an mindestens einem des Verschlussabschnitts (206) und des ersten Abschnitts (204) ausgebildet ist, wobei der Clip (306) den Wärmetauscherelementen (106) zugewandt ist, um an mindestens einem Wärmetauscherelement (106) anzuliegen.

9. Das Modul (100) nach einem der vorhergehenden Ansprüche, wobei der Verschlussabschnitt (206) ferner mindestens ein Kopplungsteil (308) umfasst, das an einem Ende des Verschlussabschnitts (206) ausgebildet ist, wobei das Kopplungsteil (308) dazu angepasst ist, mit dem ersten Abschnitt (204) zu koppeln.

10. Das Modul (100) nach einem der Ansprüche 1 bis 5, 7 oder 8, ferner umfassend Montagehalterungen (114), die an den Endplatten der Wärmetauscherelemente (106) ausgebildet sind.

11. Das Modul (100) nach dem vorhergehenden Anspruch, wobei der Verschlussabschnitt (206) ferner Öffnungen (310) umfasst, um das Hindurchführen der Montagehalterungen (114) zu ermöglichen, wenn der Verschlussabschnitt (206) mit dem Wärmetauscher (102) gekoppelt ist.

## Revendications

1. Un module (100) pour un véhicule automobile comprenant : au moins un échangeur de chaleur (102) pour un échange de chaleur entre un premier fluide et un second fluide, comprenant une paire de collecteurs (104A-B) formant un premier côté (108A) et un second côté (104B), et une pluralité d'éléments d'échange de chaleur (106) empilés entre les collecteurs (104A-B) pour permettre le flux du premier fluide entre les éléments d'échange de chaleur (106), dans lequel les éléments d'échange de chaleur (106) forment un troisième côté (108C) et un quatrième côté (108D) aux extrémités terminales de l'empilement d'éléments d'échange de chaleur (106), dans lequel le module (100) comprend : un cadre d'étanchéité (202) configuré pour isoler les côtés (108A-108D) du premier fluide, dans lequel le cadre d'étanchéité (202) comprend en outre : une première partie (204) adaptée pour être fixée à l'un des trois côtés de l'échangeur de chaleur (102) et une partie de fermeture (206) adaptée pour être fixée au côté de l'échangeur de chaleur (102) non occupé par la première partie (204), dans lequel la première partie (204) étant une partie en forme de U comprend une partie de base (208) et une paire de curseurs (210), dans lequel la partie de base (208) est formée sur un premier côté de la paire de curseurs (210), **caractérisé en ce que** au moins un curseur parmi la paire de curseurs (210) comprend au moins deux nervures droites (302A-B) s'étendant le long de la direction d'empilement des éléments d'échange de chaleur (106) et une pluralité de nervures de connexion (304) connectées entre les deux nervures droites (302A-B) pour loger une bouteille (110) de l'échangeur de chaleur (102).

2. Le module (100) selon la revendication 1, dans lequel la première partie (204) est adaptée pour être fixée aux premier et second côtés (108A-B) des collecteurs (104A-B) et au troisième côté (108C) des éléments d'échange de chaleur (102), dans lequel la partie de fermeture (206) est adaptée pour être fixée au quatrième côté (108D) des éléments d'échange de chaleur (106).

3. Le module (100) selon la revendication 2, dans lequel la paire de curseurs (210) de la première partie (204) est en contact avec les premier et second côtés (108A-B) des collecteurs (104A-B) et la partie de base (208) de la première partie (204) est en contact avec le troisième côté (108C) de l'échangeur de chaleur (102).

4. Le module (100) selon la revendication 1, dans lequel la première partie (204) est adaptée pour être fixée au premier côté (108A) du collecteur (104A) et aux troisième et quatrième côtés (108C-D) des éléments d'échange de chaleur (106), tandis que la partie de fermeture (206) est adaptée pour être fixée en parallèle au second côté (108B) du collecteur (104B).

5. Le module (100) selon la revendication 4, dans lequel la partie de base (208) de la première partie (204) est en contact avec le premier côté (108A) du collecteur (104A), et la paire de curseurs (210) de la première partie (204) est en contact avec les troisième et quatrième côtés (108C-D) de l'élément d'échange de chaleur (106).

6. L'utilisation de l'échangeur de chaleur (102) comme condenseur dans le module (100) selon l'une quelconque des revendications précédentes, dans lequel le premier fluide est de l'air et le second fluide est un réfrigérant liquide.

7. Le module (100) selon l'une quelconque des revendications 1 à 5, dans lequel au moins une nervure droite (302A) est alignée entre la bouteille (110) et le second côté (108B) du collecteur (104B).

8. Le module (100) selon l'une quelconque des revendications 1 à 5 et 7, le cadre d'étanchéité (202) comprenant en outre au moins un clip (306) formé sur au moins l'une des parties de fermeture (206) et la première partie (204), dans lequel le clip (306) fait face aux éléments d'échange de chaleur (106) pour buter sur au moins un élément d'échange de chaleur (106).

9. Le module (100) selon l'une quelconque des revendications précédentes, dans lequel la partie de fermeture (206) comprend en outre au moins une partie de couplage (308) formée à une extrémité de la partie de fermeture (206), dans lequel la partie de couplage (308) est adaptée pour se coupler avec la première partie (204).

10. Le module (100) selon l'une quelconque des revendications 1 à 5, 7 ou 8, comprenant en outre des supports de montage (114) formés sur les plaques terminales des éléments d'échange de chaleur (106).

11. Le module (100) selon la revendication précédente, la partie de fermeture (206) comprenant en outre des ouvertures (310) pour permettre le passage des supports de montage (114) à travers celles-ci lorsque la partie de fermeture (206) est couplée à l'échangeur de chaleur (102).
